# EUROPÄISCHE PATENTANMELDUNG

(11) **EP 4 844 386 A1**
(43) Veröffentlichungstag der Anmeldung: **25.11.2026**
(21) Anmeldenummer: 26179228.7
(22) Anmeldetag: 18.05.2026
(51) Int. Cl.: G01N 23/04, G01N 3/06

(54) **VORRICHTUNG UND VERFAHREN ZUR ERMITTLUNG EINER VERFORMUNG VON EINEM PROBENKÖRPER**

(30) Priorität: 19.05.2025 DE 102025119263
(71) Anmelder: Fraunhofer-Gesellschaft zur Förderung der angewandten Forschung e.V., 80686 München (DE)
(72) Erfinder: Hausherr, Jan-Marcel, 95448 Bayreuth (DE)
(74) Vertreter: Pfenning, Meinig & Partner mbB

(57) **Zusammenfassung**

Es wird eine Vorrichtung zur Ermittlung einer Verformung von einem Probenkörper bereitgestellt. Die Vorrichtung enthält einen Hochtemperaturofen, ein Heizelement, das im Innenraum des Hochtemperaturofens angeordnet ist, eine Aufnahmevorrichtung, die sich beweglich durch eine Öffnung einer Wandung des Hochtemperaturofens erstreckt und zur Aufnahme eines Probenkörpers geeignet ist eine Kraftapplikationsvorrichtung, eine Kraftmessvorrichtung, eine Röntgenstrahlungsquelle, die konfiguriert ist, Röntgenstrahlung auf einen in der Aufnahmevorrichtung aufgenommenen Probenkörper zu strahlen, ein Röntgenstrahlungsdetektor und eine Steuereinheit. Mit der erfindungsgemäßen Vorrichtung ist es möglich, eine Ermittlung einer Verformung von einem Probenkörper auf einfachere, kostengünstigere und energiesparendere Art und Weise durchzuführen. Zudem wird ein Verfahren zur einfacheren, kostengünstigeren und energiesparenderen Ermittlung einer Verformung von einem Probenkörper vorgestellt.

## Beschreibung

Es wird eine Vorrichtung zur Ermittlung einer Verformung von einem Probenkörper bereitgestellt. Die Vorrichtung enthält einen Hochtemperaturofen, ein Heizelement, das im Innenraum des Hochtemperaturofens angeordnet ist, eine Aufnahmevorrichtung, die sich beweglich durch eine Öffnung einer Wandung des Hochtemperaturofens erstreckt und zur Aufnahme eines Probenkörpers geeignet ist eine Kraftapplikationsvorrichtung, eine Kraftmessvorrichtung, eine Röntgenstrahlungsquelle, die konfiguriert ist, Röntgenstrahlung auf einen in der Aufnahmevorrichtung aufgenommenen Probenkörper zu strahlen, ein Röntgenstrahlungsdetektor und eine Steuereinheit. Mit der erfindungsgemäßen Vorrichtung ist es möglich, eine Ermittlung einer Verformung von einem Probenkörper auf einfachere, kostengünstigere und energiesparendere Art und Weise durchzuführen. Zudem wird ein Verfahren zur einfacheren, kostengünstigeren und energiesparenderen Ermittlung einer Verformung von einem Probenkörper vorgestellt.

Bei hohen und höchsten Temperaturen stellen normgerechte Messungen von mechanischen Kennwerten eines Probenkörpers eine Herausforderung dar. Während die Kraftmessungen üblicherweise im kalten Bereich des Laststrangs erfolgen und problemlos möglich sind, stellt das Erfassen der Dehnungen bzw. Verformungen der Proben eine Herausforderung dar, die nur mit höherem Aufwand erfolgen kann. Allerdings sind genaue Daten über die Verformungen für die Kennwertbestimmung wesentlich.

Zum Erfassen von Dehnungen bei hohen Temperaturen werden üblicherweise die zwei Messprinzipien optische Analyse oder (Klemm-)Messtaster eingesetzt. Beide Methoden weisen Vor- und Nachteile auf.

Für das Erfassen von Dehnungen bei hohen Temperaturen über optische Analyse werden meist Farbpunkte (sogenannte "Speckle"-Muster) auf die Probe aufgesprüht. Dann wird per Laser oder Kamera die Verschiebung des Musters durch die Lastaufbringung betrachtet und daraus die Verformungen / Dehnungen berechnet. Alternativ wird die Probe mit mehreren geometrischen Konturen versehen. Dies sind angebrachte Strukturen, wie z. B. kleine Pyramiden oder Halbkugeln, Ausbuchtungen in der Probengeometrie oder thermisch beständige Drähte/Folien, die entweder per Laser abgetastet oder als Schattenwurf (Leuchtquelle mit gegenüberliegender Kamera) erfasst werden. Während die optischen Methoden dank moderner Digitalsensoren eine hohe Genauigkeit aufweisen und auch 2-dimensionale Verformungen (Längs- und Querdehnungen) erfassen, treten bei Messungen über dieses Verfahren mit sehr hohen Temperaturen die folgenden Nachteile auf.

Erstens wird bei Öfen ohne Vakuum die Atmosphäre ungleichmäßig erhitzt, wodurch Schlieren und Verwirbelungen entstehen, die eine Verzerrung des Bildes verursachen können und Verfälschungen verursachen. Durch optische Bildbearbeitung kann dieser Effekt reduziert werden, jedoch muss die Messung fast immer durch Mittelungsalgorithmen geglättet werden.

Zweitens verursacht der optische Durchgang/Einlass in den Ofenraum bei hohen Temperaturen immer einen Wärmeverlust aufgrund der Wärmestrahlung, was energieintensiv (unökonomisch) ist und zudem oberhalb von ca. 1000 °C Temperaturunregelmäßigkeiten erzeugt. Um eine ausreichende Genauigkeit der Temperatur zu gewährleisten, muss zur Kompensierung die Ofenkammer angepasst und/oder die Heizelemente individuell angesteuert werden, was einen erhöhten Aufwand bedeutet, die Messung somit kompliziert und zeitintensiv gestaltet. Zudem kann durch die aufgrund der Sichtfenster bedingten Öffnungen in der Ofenisolierung eine Luftverwirbelung auftreten und das Material der Fenster muss auf die Wellenlänge der Laser abgestimmt sein.

Drittens beginnt die Probe ab einer Temperatur von ca. 1000 °C an zu glühen. Dadurch wird die Oberfläche der Probe rotleuchtend bis weißleuchtend und verursacht Probleme bei der Erfassung mit Kameras. Laser müssen im blauen oder grünen Spektrum arbeiten, um störungsfreie Ergebnisse zu erhalten.

Für das alternative Erfassen von Dehnungen bei hohen Temperaturen über (Klemm-)Messtaster werden üblicherweise keramische Extensometer eingesetzt, die seitlich (bei Zug-/Druckdehnungen) oder von unten (Biegeverformung) in den Hochtemperaturofen reichen und auf die Probe gedrückt werden. Dabei werden durch eine Öffnung der Ofenisolierung mehrere keramische Stäbchen in den Ofenraum eingebracht (2 Stück bei Dehnungsmessung, bis zu 5 Stück bei Biegemessungen), die mit einem gewissen Druck auf die Probe drücken. Bei Messungen mithilfe von (Klemm-)Messtastern treten die folgenden Nachteile auf.

Erstens verursachen die Öffnungen durch die Ofenisolierung thermische Inhomogenitäten und damit Variationen der Temperatur und erfordern ein deutlich höheres Temperaturmanagement.

Zweitens muss die thermische Ausdehnung des Extensometers rechnerisch bestimmt werden. Bei sehr hohen Temperaturen kann man aufgrund des unbekannten Temperaturgradienten im Isolierbereichs nicht immer die Länge eindeutig berechnen. Daher müssen die Längen experimentell bestimmt werden, was kompliziert und zeitaufwändig ist.

Drittens ist das Anbringen des Extensometers bei Inertgasbedingungen schwierig, da die notwendigen Öffnungen einen Luftaustausch mit der Umgebung verursachen können. Bei Vakuum muss der Messaufbau im Vakuumbereich erfolgen, was Probleme mit dem Anbringen der Extensometer bedeutet.

Viertens erfolgt das Anbringen des Extensometers (bei Zugmessungen) mit einem Anpressdruck. Ein Erweichen der Probe durch thermische Effekte kann seitliche Verformungen mit sich bringen und die Ergebnisse verfälschen.

MacDowell, A.A. et al. (AIP Conference Proceedings, 1741, 050005 (2016); DOI 10.1063/1.4952925) offenbaren eine Vorrichtung und ein Verfahren zur Ermittlung einer Verformung von einem Probenkörper, bei der/dem der Probenkörper auf Hochtemperaturen erhitzt wird und eine hohe Kraft auf den Probenkörper appliziert wird, wobei der Probenkörper mit hochenergetischer Röntgenstrahlung bestrahlt wird und Bilder des Probenkörpers über einen Röntgendetektor aufgenommen werden, um einen Grad der Verformung zu ermitteln. Der Nachteil dieser Vorrichtung und dieses Verfahrens ist, dass es kompliziert, kostenintensiv und energieintensiv ist. Dies liegt zum einen daran, dass in der Vorrichtung eine sehr hochenergetische Röntgenstrahlung eingesetzt wird, die nicht mit kostengünstigen Röntgenröhren hergestellt werden kann, sondern eine Synchrotron-Strahlungsquelle erfordern. Zum anderen liegt dies daran, dass diese Vorrichtung während ihrem Betrieb einen hohen Wärmeverlust an die Umgebung aufweist, sodass der Betrieb der Vorrichtung und die Durchführung des Verfahrens kostenintensiv und energieintensiv, also nicht sehr ökonomisch, ist.

Ausgehend hiervon war es die Aufgabe der vorliegenden Erfindung, eine Vorrichtung und ein Verfahren zur Ermittlung einer Verformung von einem Probenkörper bereitzustellen, die/das zumindest einen der oben genannten Nachteile der Vorrichtungen und Verfahren aus dem Stand der Technik überwindet. Insbesondere sollte es mit der Vorrichtung und dem Verfahren möglich sein, eine Ermittlung einer Verformung von einem Probenkörper auf zumindest einfachere, kostengünstigere und/oder energiesparendere Art und Weise durchzuführen.

Die Aufgabe wird gelöst durch die Vorrichtung mit den Merkmalen von Anspruch 1 und das Verfahren mit den Merkmalen von Anspruch 9. Die abhängigen Ansprüche zeigen vorteilhafte Weiterbildungen auf.

Erfindungsgemäß wird eine Vorrichtung zur Ermittlung einer Verformung von einem Probenkörper bereitgestellt, enthaltend oder bestehend aus:
a) ein Hochtemperaturofen, der einen Innenraum und einen Außenraum aufweist, wobei der Innenraum vom Außenraum durch eine Wandung des Hochtemperaturofens getrennt ist, wobei die Wandung eine thermische Isolierung aufweist;
b) mindestens ein Heizelement, das im Innenraum des Hochtemperaturofens angeordnet ist und geeignet ist, den Innenraum des Hochtemperaturofens auf eine Temperatur im Bereich von >25 °C aufzuheizen;
c) eine Aufnahmevorrichtung, die sich beweglich durch mindestens eine Öffnung der Wandung des Hochtemperaturofens erstreckt (optional durch mindestens zwei Öffnungen der Wandung des Hochtemperaturofens erstreckt), wobei ein erster Teil der Aufnahmevorrichtung im Innenraum des Hochtemperatorofens angeordnet ist und zur Aufnahme eines Probenkörpers geeignet ist und ein zweiter Teil der Aufnahmevorrichtung im Außenraum des Hochtemperaturofens angeordnet ist (wobei optional auch ein dritter Teil der Aufnahmevorrichtung im Außenraum des Hochtemperaturofens angeordnet ist);
d) eine Kraftapplikationsvorrichtung, die im Außenraum des Hochtemperaturofens mit dem zweiten Teil der Aufnahmevorrichtung verbunden ist und geeignet ist, eine Kraft auf einen Probenkörper zu applizieren, der in der Aufnahmevorrichtung aufgenommen ist;
e) eine Kraftmessvorrichtung, die im Außenraum des Hochtemperaturofens mit dem zweiten Teil der Aufnahmevorrichtung verbunden ist und geeignet ist, eine auf den Probenkörper applizierte Kraft zu messen, wobei die Kraftmessvorrichtung und die Kraftapplikationsvorrichtung als eine einzelne Vorrichtung oder als mindestens zwei separate Vorrichtungen ausgestaltet sind;
f) eine Röntgenstrahlungsquelle, die im Außenraum des Hochtemperaturofens angeordnet ist und konfiguriert ist, Röntgenstrahlung in einem Strahlengang auf einen Probenkörper zu strahlen, der in der Aufnahmevorrichtung aufgenommen ist, wobei die Röntgenstrahlungsquelle eine Röntgenröhre enthält oder daraus besteht;
g) ein Röntgenstrahlungsdetektor, der im Außenraum des Hochtemperaturofens und in dem Strahlengang der Röntgenstrahlungsquelle angeordnet ist und konfiguriert ist, Röntgenstrahlung des Strahlengangs zu detektieren; und
h) eine Steuereinheit.

Mit der erfindungsgemäßen Vorrichtung ist es möglich, auf einfachere, kostengünstigere und energiesparendere Art und Weise eine Verformung von einem Probenkörper zu ermitteln.

Dies liegt erstens darin begründet, dass in der erfindungsgemäßen Vorrichtung eine Röntgenstrahlungsquelle zum Einsatz kommt, die eine Röntgenröhre enthält oder daraus besteht, wodurch die erfindungsgemäße Vorrichtung nicht auf eine (externe) Synchrotron-Strahlungsquelle als Quelle der Röntgenstrahlung angewiesen ist.

Zweitens weist die Wandung des Hochtemperaturofens der erfindungsgemäßen Vorrichtung eine thermische Isolierung auf, welche Wärmeverluste aus dem Hochtemperaturofen in dessen Umgebung reduziert, wodurch die erfindungsgemäße Vorrichtung energiesparender und kostengünstiger (d. h. ökonomischer) durchgeführt werden kann als bekannte Verfahren aus dem Stand der Technik.

Drittens ist für eine Erfassung einer Verformung eines Probenkörpers durch die erfindungsgemäße Vorrichtung lediglich eine Erfassung der Außenkonturen des Probenkörpers erforderlich (d. h. ein Schattenwurf mit Abbildung der Kanten ohne eine vollständige Durchstrahlung des Probenkörpers ist ausreichend), wodurch die Röntgenstrahlungsquelle der Vorrichtung mit einer minimalen Strahlungsleistung betrieben werden kann. Dies spart elektrische Energie und erlaubt einen kostengünstigen Betrieb der Vorrichtung. Bei heterogen aufgebauten Werkstoffen mit diskreten oder abgrenzbaren Gefügeanteilen (bzw. Risse oder Poren) können die im Inneren der Probe befindlichen Werkstoffunterscheidungen als Referenz für die Erfassung von Verformungen verwendet werden.

Viertens wird Röntgenstrahlung als hochenergetische elektromagnetische Strahlung nicht von atmosphärischen Einflüssen, wie z. B. Verwirbelungen, beeinträchtigt, was die Detektionspräzision erhöht. Ferner erlaubt die Detektion von Röntgenstrahlung eine berührungslose Detektion, was die Erfassung von nicht-lastbedingten geometrischne Veränderungen, wie z. B. Gefügeänderungen oder Erweichungsprozesse, in einem Probenkörper erlaubt. Die Auflösungen der Längenmessungen an dem Probenlörper liegen im einstelligen Mikrometer-Bereich.

Falls die thermische Isolierung der Wandung die von der Röntgenstrahlungsquelle emittierte Röntgenstrahlung absorbiert, kann besagter Absorptionsbeitrag der thermischen Isolierung der Wandung durch eine Bildkalibrierung ausgeblendet werden. Die Steuereinheit kann konfiguriert sein, eine solche Bildkalibrierung durchzuführen. Der Vorteil ist, dass die Probe ohne Störsignal von der thermischen Isolierung abgebildet wird.

Die Wandung des Hochtemperaturofens kann ein thermisch isolierendes Material, das für Röntgenstrahlung transparent ist, enthalten oder daraus bestehen. Der Vorteil ist, dass keine Bildkalibrierung nötig ist und die Detektionssensitivität und Detektionspräzision höher ausfallen kann.

Ferner kann die Wandung einen keramischen Schaum enthalten oder daraus bestehen. Ein keramischer Schaum hat den Vorteil, dass er einerseits eine hohe Temperaturbeständigkeit bewirkt und andererseits eine starke thermische Isolierung bereitstellt. Der keramische Schaum enthält bevorzugt ein Oxid eines chemischen Elements, das eine Ordnungszahl im Bereich von ≤ 14 aufweist, oder besteht daraus. Das Oxid ist bevorzugt ausgewählt aus der Gruppe bestehend aus SiO₂, Al₂O₃, MgO und Kombinationen hiervon.

Zudem kann die Wandung Kohlenstoff, bevorzugt Graphit, enthalten.

Abgesehen davon kann die Wandung eine Stützstruktur aufweisen, welche für Röntgenstrahlung transparent ist. Die Stützstruktur stellt bevorzugt eine weitere Wandung dar, welche die Wandung kontaktiert, die das thermisch isolierende Material enthält oder daraus besteht. Die weitere Wandung enthält bevorzugt ein Material oder besteht daraus, das ausgewählt ist aus der Gruppe bestehend aus Polymer, Keramik, Metall und Kombinationen hiervon, wobei das Material optional ein faserverstärktes Material ist.

Der erste Teil der Aufnahmevorrichtung (im Innenraum des Hochtemperatorofens) kann einen Probenkörper aufweisen, der von der Aufnahmevorrichtung aufgenommen ist. In einer bevorzugten Ausführungsform weist der Probenkörper auf einer Seite, welche der von der Röntgenstrahlungsquelle abgestrahlten Strahlung zugewandt ist, ein Muster auf, das durch Partikel eines Pulvers etabliert ist (z. B. ein "Speckle"-Muster, ein Punkte-Muster und/oder ein Linien-Muster). Das Pulver kann Atome eines chemischen Elements enthalten oder daraus bestehen, das eine Ordnungszahl im Bereich von ≥ 42 und einen Schmelzpunkt im Bereich von ≥ 1500 °C aufweist, wobei das chemische Element bevorzugt ausgewählt ist aus der Gruppe bestehend aus Molybdän, Palladium, Tantal, Wolfram, Rhenium und Kombinationen hiervon. Der Vorteil an dem Muster, das durch die Partikel des Pulvers gebildet wird, ist, dass der Röntgenkontrast an den Stellen bzw. Punkten der Partikel des Pulvers gegenüber dem Probenkörper erhöht sein kann (aufgrund der hohen Ordnungszahl). Dadurch kann die Detektionssensitivität und auch die Detektionspräzision ansteigen, insbesondere bei Probenkörpern, die von sich aus nur eine geringe Absorption von Röntgenstrahlung zeigen.

Der zweite Teil der Aufnahmevorrichtung (im Außenraum des Hochtemperaturofens) kann mindestens einen Zylinder mit einer offenen und einer geschlossenen Seite enthalten (d. h. eine Grundfläche ist offen und die andere, gegenüberliegende Grundfläche ist geschlossen). Der mindestens eine kann ein chemisches Element enthalten oder daraus bestehen, das eine Ordnungszahl im Bereich von ≥ 26 aufweist, wobei das chemische Element besonders bevorzugt Stahl, Blei, Zinn, Molybdän, Tantal, Zirkon und/oder Wolfram enthält oder daraus besteht. Der Vorteil an einem solchen Zylinder am zweiten Teil der Aufnahmevorrichtung ist, dass Röntgenstrahlung von dem Zylinder stark absorbiert wird und somit ein Benutzer der Vorrichtung gegenüber Röntgenstrahlung, die von der Röntgenstrahlungsquelle ausgeht, abgeschirmt werden kann.

Hierbei kann die offene Seite des mindestens einen Zylinders in Richtung einer Abschirmungswandung der Vorrichtung angeordnet sein und der mindestens eine Zylinder um einen weiteren Zylinder herum angeordnet sein, wobei der weitere Zylinder (zwei offene Grundflächen aufweist und) um mindestens eine Öffnung der Abschirmungswandung angeordnet ist, durch die sich der zweite Teil der Aufnahmevorrichtung beweglich erstreckt, wobei der weitere Zylinder einstückig mit der Abschirmungswandung ist, oder mit der Abschirmungswandung verbunden ist (z. B. gasdicht). Durch der Anordnung des Zylinders um bzw. auf dem weiteren Zylinder entsteht zwischen den beiden Zylindern ein mäanderförmiger Gang bzw. eine mänderförmige Abschirmung ("Einfachmäander"), welche eine besonders hohe Sicherheit bei der Abschirmung gegenüber Röntgenstrahlung bietet. Besagte sichere Abschirmung kann sogar noch weiter erhöht werden, wenn auf dem Zylinder mindestens ein weiterer Zylinder angeordnet wird, um den bereits bestehenden mäanderförmigen Gang in mäanderförmiger Form weiterzuführen ("Doppelmäander").

Falls das mindestens eine Heizelement die von der Röntgenstrahlungsquelle emittierte Röntgenstrahlung absorbiert (z. B. weil es im Strahlengang angeordnet ist), kann besagter Absorptionsbeitrag des mindestens einen Heizelements durch eine Bildkalibrierung ausgeblendet werden. Die Steuereinheit kann konfiguriert sein, eine solche Bildkalibrierung durchzuführen. Der Vorteil ist, dass die Probe ohne Störsignal von dem mindestens einen Heizelement abgebildet wird.

Das mindestens eine Heizelement kann dergestalt im Innenraum des Hochtemperaturofens angeordnet sein, dass es sich nicht innerhalb des Strahlengangs der Röntgenstrahlungsquelle befindet. Der Vorteil ist, dass das Heizelement ein Material enthalten kann, das für Röntgenstrahlung opak ist und keine Bildkalibrierung erforderlich ist.

Ferner kann das mindestens eine Heizelement geeignet sein, den Innenraum des Hochtemperaturofens auf eine Temperatur im Bereich von ≥ 100 °C, bevorzugt ≥ 200 °C, besonders bevorzugt ≥ 400 °C, ganz besonders bevorzugt ≥ 800 °C, insbesondere ≥ 1400 °C, optional ≥ 2400 °C, aufzuheizen.

Zudem kann das Heizelement ausgewählt sein aus der Gruppe bestehend aus elektrische Widerstandsheizung, IR-Strahler und Kombinationen hiervon.

Abgesehen davon kann die Vorrichtung mindestens zwei, besonders bevorzugt mindestens drei, insbesondere mindestens vier, solcher Heizelemente (d. h. Heizelemente mit jeweils mindestens einer der oben genannten Eigenschaften) enthalten.

Die Röntgenstrahlungsquelle kann konfiguriert sein, polychromatische Röntgenstrahlung abzustrahlen. Dies erlaubt eine noch einfachere und kostengünstigere Ermittlung einer Verformung von einem Probenkörper.

Die Kraftapplikationsvorrichtung der Vorrichtung kann geeignet sein, eine Kraft auf einen Probenkörper zu applizieren, der in der Aufnahmevorrichtung der Vorrichtung aufgenommen ist, wobei die Kraft ausgewählt ist aus der Gruppe bestehend aus Zugkraft, Druckkraft, Scherkraft, Biegekraft und Kombinationen hiervon. Bevorzugt ist die Kraftapplikationsvorrichtung geeignet, eine Zugkraft, Druckkraft, Scherkraft und Biegekraft auf einen Probenkörper zu applizieren, der in der Aufnahmevorrichtung aufgenommen ist.

Die die Steuereinheit der Vorrichtung kann konfiguriert sein, das mindestens eine Heizelement, bevorzugt alle Heizelemente der Vorrichtung, zu steuern. Der Innenraum des Hochtemperaturofens kann einen Temperatursensor zur Erfassung einer Temperatur eines Probenkörpers, der der in der Aufnahmevorrichtung aufgenommen ist, aufweisen und die Steuereinheit kann konfiguriert sein, eine Temperatur des Probenkörpers basierend auf einem Signal des Temperatursensors zu regeln.

Ferner kann die Steuereinheit der Vorrichtung konfiguriert sein, die Kraftmessvorrichtung zu steuern, wobei die Steuereinheit bevorzugt konfiguriert ist, eine auf den Probenkörper über die Aufnahmevorrichtung applizierte Kraft basierend auf einem Signal der Kraftmessvorrichtung zu regeln.

Zudem kann die Steuereinheit der Vorrichtung konfiguriert sein, die Röntgenstrahlungsquelle zu steuern, wobei die Steuereinheit bevorzugt konfiguriert ist, die Röntgenstrahlungsquelle zur Abstrahlung von Röntgenstrahlung einer Wellenlänge in einem vordefinierten Bereich zu veranlassen.

Darüber hinaus kann die Steuereinheit der Vorrichtung konfiguriert sein, den Röntgenstrahlungsdetektor zu steuern, wobei die Steuereinheit bevorzugt konfiguriert ist, Signale von dem Röntgenstrahlungsdetektor zu empfangen und basierend auf den Signalen des Röntgenstrahlungsdetektors eine Verformung eines Probenkörpers zu ermitteln. Die Steuereinheit ist bevorzugt konfiguriert, ferner Signale von der Kraftmessvorrichtung bezüglich einer auf den Probenkörper applizierten Kraft zu empfangen und basierend auf den Signalen der Kraftmessvorrichtung und auf Signalen des Röntgenstrahlungsdetektors einen Kennwert des Probenkörpers zu ermitteln,. Der Kennwert kann hierbei ausgewählt sein aus der Gruppe bestehend aus Zugkennwert, Druckkennwert, Scherkennwert, Biegekennwert und Kombinationen hiervon.

Die Vorrichtung kann ferner eine Gasquelle enthalten, die geeignet ist, ein Gas in den Innenraum des Hochtemperaturofens zu leiten, wobei das Gas bevorzugt ausgewählt ist aus der Gruppe bestehend aus Inertgas, Reaktionsgas und Kombinationen hiervon, wobei das Inertgas bevorzugt ein Edelgas enthält oder daraus besteht.

Zudem kann die Vorrichtung ferner eine Vakuumpumpe enthalten, die geeignet ist, in dem Innenraum des Hochtemperaturofens ein Vakuum zu etablieren.

Abgesehen davon kann die Vorrichtung ferner eine Abschirmungswandung zur Abschirmung von Röntgenstrahlung enthalten, die eine Schutztür umfasst. Die Schutztür kann eine Türverkleidung mit einer Überlappung, bevorzugt einer Überlappung mit einem mäandernden Pfad, aufweisen. Ferner kann die Tür einen Schutzschalter aufweisen. In einem Innenraum der Abschirmungswandung können der Hochtemperaturofen, die Röntgenstrahlungsquelle und der Röntgenstrahlungsdetektor angeordnet sein und in einem Außenraum der Abschirmungsvorrichtung kann der zweite Teil der Aufnahmevorrichtung angeordnet sein, wobei sich der zweite Teil der Aufnahmevorrichtung beweglich durch mindestens eine Öffnung der Abschirmungswandung erstreckt und durch einen Zylinder erstreckt, der einstückig mit der Abschirmungswandung ist oder mit der Abschirmungswandung verbunden ist.

Die Abschirmungswandung und/oder der Zylinder können ein chemisches Element enthalten oder daraus bestehen, das eine Ordnungszahl im Bereich von ≥ 26 aufweist, wobei das chemische Element besonders bevorzugt Stahl, Blei, Zinn, Molybdän, Tantal und/oder Wolfram enthält oder daraus besteht, wobei chemische Element besonders bevorzugt ausgewählt ist aus der Gruppe bestehend aus Stahl, Blei, Zinn und Kombinationen hiervon.

Erfindungsgemäß wird ferner ein Verfahren zur Ermittlung einer Verformung von einem Probenkörper bereitgestellt, umfassend die folgenden Schritte:
a) Bereitstellen einer erfindungsgemäßen Vorrichtung;
b) Ausstatten der Aufnahmevorrichtung der Vorrichtung mit einem Probenkörper;
c) Strahlen von Röntgenstrahlung in einem Strahlengang auf den Probenkörper über die Röntgenstrahlungsquelle der Vorrichtung;
d) Applizieren einer Kraft auf den mit Röntgenstrahlung bestrahlten Probenkörper durch die Kraftapplikationsvorrichtung der Vorrichtung;
e) Detektieren von Röntgenstrahlung des Strahlengangs durch den Röntgenstrahlungsdetektor; und
f) Ermittlung einer Verformung von dem Probenkörper basierend auf Signalen des Röntgenstrahlungsdetektors.

Mit dem erfindungsgemäßen Verfahren ist es möglich, auf einfachere, kostengünstigere und energiesparendere Art und Weise eine Verformung von einem Probenkörper zu ermitteln.

In Schritt b) des Verfahrens kann der Probenkörper auf einer Seite, welche der von der Röntgenstrahlungsquelle abgestrahlten Strahlung zugewandt ist, mit einem Muster versehen werden, das durch Partikel eines Pulvers etabliert wird (z. B. ein "Speckle"-Muster, ein Punkte-Muster und/oder ein Linien-Muster). Dies kann beispielsweise durch Besprühung des Probenkörpers mit dem Pulver realisiert werden. Das Pulver kann Atome eines chemischen Elements enthalten oder daraus bestehen, das eine Ordnungszahl im Bereich von ≥ 42 und einen Schmelzpunkt im Bereich von ≥ 1500 °C aufweist. Das chemische Element ist bevorzugt ausgewählt ist aus der Gruppe bestehend aus Molybdän, Palladium, Tantal, Wolfram, Rhenium und Kombinationen hiervon. Bei der Durchleuchtung des Probenkörpers mit der Röntgenstrahlung sieht man dann die Partikel (Körner) des Pulvers aufgrund deren starker Absorption von Röntgenstrahlung deutlicher als den Hintergrund des Probenkörpers und kann bei Verformungen des Probenkörpers eine Verschiebung der Partikel (Körner) des Pulvers zueinander als Referenzen für eine Verformung (z. B. eine Dehnung) des Probenkörpers (in die Breite und in die Höhe) nutzen.

In Schritt c) des Verfahrens kann über die Röntgenstrahlungsquelle der Vorrichtung Röntgenstrahlung in einem Strahlengang auf den Probenkörper ge-strahlt werden, die polychromatische Röntgenstrahlung ist.

Vor Schritt d) des Verfahrens kann der Innenraum des Hochtemperaturofens über das mindestens eine Heizelement der Vorrichtung auf eine Temperatur im Bereich von ≥ 100 °C, bevorzugt ≥ 200 °C, besonders bevorzugt ≥ 400 °C, ganz besonders bevorzugt ≥ 800 °C, insbesondere ≥ 1300 °C, optional ≥ 2400 °C, aufgeheizt werden. Das Aufheizen kann durch mindestens zwei, besonders bevorzugt mindestens drei, insbesondere mindestens vier, Heizelemente der Vorrichtung durchgeführt werden.

In Schritt d) des Verfahrens kann eine Kraft auf den Probenkörper appliziert werden, die ausgewählt ist aus der Gruppe bestehend aus Zugkraft, Druckkraft, Scherkraft, Biegekraft und Kombinationen hiervon, wobei bevorzugt, optional gleichzeitig oder sequentiell, eine Zugkraft, Druckkraft, Scherkraft und Biegekraft auf den Probenkörper appliziert wird.

In dem Verfahren kann eine Temperatur des Probenkörpers basierend auf einem Signal eines Temperatursensors der Vorrichtung geregelt werden.

Ferner kann in dem Verfahren die auf den Probenkörper applizierte Kraft durch die Kraftmessvorrichtung der Vorrichtung gemessen werden und die auf den Probenkörper applizierte Kraft basierend auf einem Signal der Kraftmessvorrichtung geregelt werden.

Das Verfahren kann ferner ein Messen der auf den Probenkörper applizierten Kraft durch die Kraftmessvorrichtung der Vorrichtung umfassen, wobei, basierend auf Signalen des Röntgenstrahlungsdetektors und Signalen der Kraftmessvorrichtung ein Kennwert des Probenkörpers ermittelt wird. Hierbei kann der Kennwert ausgewählt sein aus der Gruppe bestehend aus Zugkennwert, Druckkennwert, Scherkennwert, Biegekennwert und Kombinationen hiervon.

Anhand der nachfolgenden Figuren und des nachfolgenden Beispiels soll der erfindungsgemäße Gegenstand näher erläutert werden, ohne diesen auf die hier dargestellten, spezifischen Ausgestaltungsformen einschränken zu wollen.

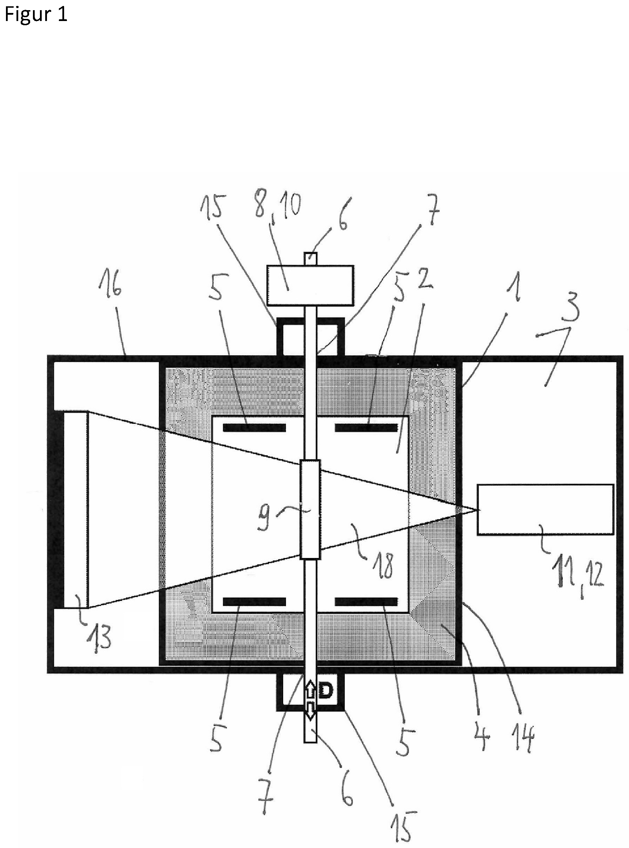

Figur 1 zeigt schematisch eine erfindungsgemäße Vorrichtung zur Ermittlung einer Verformung von einem Probenkörper. Die Vorrichtung enthält einen Hochtemperaturofen 1, der einen Innenraum 2 und einen Außenraum 3 aufweist, wobei der Innenraum 2 vom Außenraum 3 durch eine Wandung 4 des Hochtemperaturofens 1 getrennt ist, wobei die Wandung 4 eine thermische Isolierung aufweist. Ferner enthält die Vorrichtung hier vier Heizelemente 5, die jeweils im Innenraum 2 des Hochtemperaturofens 1 angeordnet sind und jeweils geeignet sind, den Innenraum 2 des Hochtemperaturofens 1 auf eine Temperatur im Bereich von ≥1300 °C aufzuheizen. Zudem enthält die Vorrichtung eine Aufnahmevorrichtung 6, die sich beweglich durch mindestens zwei Öffnungen 7 der Wandung 4 des Hochtemperaturofens 1 erstreckt, wobei ein erster Teil der Aufnahmevorrichtung 6 im Innenraum 2 des Hochtemperatorofens 1 angeordnet ist und zur Aufnahme eines Probenkörpers 9 geeignet ist und ein zweiter Teil der Aufnahmevorrichtung 6 im Außenraum 3 des Hochtemperaturofens 1 angeordnet ist. Darüber hinaus enthält die Vorrichtung eine Kraftapplikationsvorrichtung 8, die im Außenraum 3 des Hochtemperaturofens 1 mit dem zweiten Teil der Aufnahmevorrichtung 6 verbunden ist und geeignet ist, eine Kraft auf einen Probenkörper 9 zu applizieren, der in der Aufnahmevorrichtung 6 aufgenommen ist. Abgesehen davon enthält die Vorrichtung eine Kraftmessvorrichtung 10, die im Außenraum 3 des Hochtemperaturofens 1 mit dem zweiten Teil der Aufnahmevorrichtung 6 verbunden ist und geeignet ist, eine auf den Probenkörper 9 applizierte Kraft zu messen, wobei die Kraftmessvorrichtung 10 und die Kraftapplikationsvorrichtung 8 hier als eine einzelne Vorrichtung ausgestaltet sind. Ferner enthält die Vorrichtung eine Röntgenstrahlungsquelle 11, die im Außenraum 3 des Hochtemperaturofens 1 angeordnet ist und konfiguriert ist, Röntgenstrahlung in einem Strahlengang 18 auf einen Probenkörper 9 zu strahlen, der in der Aufnahmevorrichtung 6 aufgenommen ist, wobei die Röntgenstrahlungsquelle 11 eine Röntgenröhre 12 enthält oder daraus besteht. Zudem enthält die Vorrichtung einen Röntgenstrahlungsdetektor 13, der im Außenraum 3 des Hochtemperaturofens 1 und in dem Strahlengang 18 der Röntgenstrahlungsquelle 11 angeordnet ist und konfiguriert ist, Röntgenstrahlung des Strahlengangs 18 zu detektieren. Ferner enthält die Vorrichtung eine Steuereinheit (nicht dargestellt).

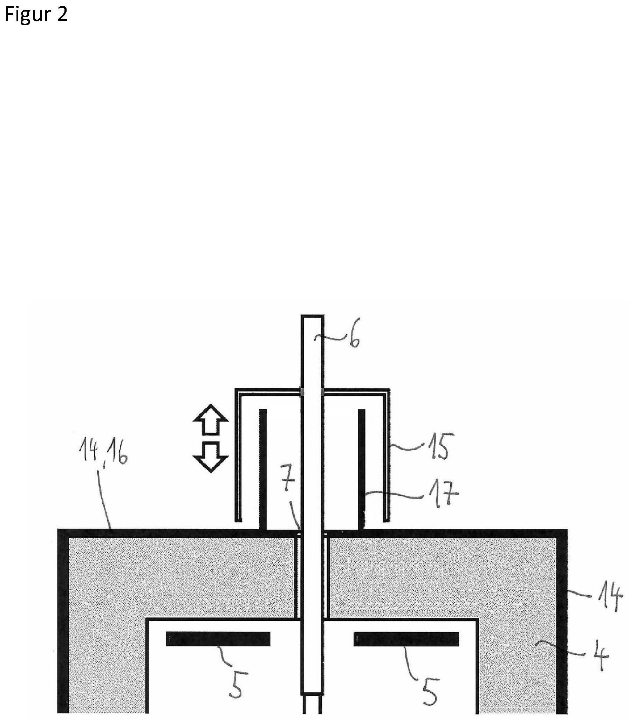

Figur 2 zeigt vergrößert einen Bereich der erfindungsgemäßen Vorrichtung aus Figur 1, in dem die Aufnahmevorrichtung 6 durch die Wandung 4 des Hochtemperaturofens hindurch und durch die Abschirmungswandung 16 der Vorrichtung hindurch in den Außenraum des Hochtemperaturofens (und hier auch der Abschirmungswandung 16) vordringt. Hier weist die Aufnahmevorrichtung 6 in besagtem Außenraum einen ersten Zylinder 15 auf, der eine offenen Seite und einer geschlossenen Seite enthält, wobei der erste Zylinder 15 bevorzugt hier aus Stahl besteht. Die offene Seite des ersten Zylinders 15 ist in Richtung der Abschirmungswandung 16 der Vorrichtung angeordnet. Zudem ist der erste Zylinder 15 um einen weiteren Zylinder 17 herum angeordnet, der um eine Öffnung 7 der Abschirmungswandung 16 angeordnet ist, durch die sich der zweite Teil der Aufnahmevorrichtung 6 beweglich erstreckt. In diesem Fall ist der weitere Zylinder 17 einstückig mit der Abschirmungswandung 16. Durch den ersten Zylinder 15 und zweiten Zylinder 17 entsteht ein mäanderförmiger Gang bzw. eine mänderförmige Abschirmung ("Einfachmäander"), welche eine besonders hohe Sicherheit bei der Abschirmung gegenüber Röntgenstrahlung bietet.

### Beispiel - Ausführungsform einer erfindungsgemäßen Vorrichtung

Die erfindungsgemäße Vorrichtung kann beispielhaft als Hochtemperaturofen einen Hochtemperaturofen aufweisen, dessen Wandung eine thermische Isolierung aus Al₂O₃-Vakuumformschaum als Isolierung aufweist. Optional kann die Wandung Grafit enthalten, falls in Innenraum des Hochtemperaturofens ein Vakuum angelegt werden sollte.

Die Röntgenstrahlungsquelle der Vorrichtung kann eine SiteX 120PB für den portablen Einsatz sein und der Röntgenstrahlungsdetektor der Vorrichtung kann ein 81 mm Hamamatsu Detektor mit einer Pixelgröße von 21 µm sein.

Die Vorrichtung weist eine Abschirmungswandung zur Abschirmung von Röntgenstrahlung auf, die aus 5 mm Stahl oder 2 mm Blei besteht.

Der zweite Teil der Aufnahmevorrichtung der Vorrichtung enthält einen Zylinder mit einer offenen und einer geschlossenen Seite, der aus Stahl besteht und eine Wandstärke von 2 mm und einen Durchmesser von 20 mm aufweist.

Die offene Seite des Zylinders ist in Richtung der Abschirmungswandung der Vorrichtung angeordnet und der Zylinder ist um einen weiteren Zylinder herum angeordnet, der um mindestens eine Öffnung der Abschirmungswandung angeordnet ist, durch die sich der zweite Teil der Aufnahmevorrichtung beweglich erstreckt. Der weitere Zylinder besteht ebenfalls aus Stahl und weist ebenfalls eine Wandstärke von 3 mm auf, hat jedoch einen größeren Durchmesser von 30 mm, sodass er um den (ersten) Zylinder herum angeordnet werden kann.

### Bezugszeichenliste

- 1:: Hochtemperaturofen;
- 2:: Innenraum des Hochtemperaturofens;
- 3:: Außenraum des Hochtemperaturofens;
- 4:: Wandung des Hochtemperaturofens (mit thermischer Isolierung);
- 5:: Heizelement;
- 6:: Aufnahmevorrichtung;
- 7:: Öffnung in der Wandung des Hochtemperaturofens;
- 8:: Kraftapplikationsvorrichtung;
- 9:: Probenkörper;
- 10:: Kraftmessvorrichtung;
- 11:: Röntgenstrahlungsquelle;
- 12:: Röntgenröhre;
- 13:: Röntgenstrahlungsdetektor;
- 14:: Stützstruktur der Wandung des Hochtemperaturofens;
- 15:: Zylinder mit einer offenen und einer geschlossenen Seite;
- 16:: Abschirmungswandung der Vorrichtung;
- 17:: weiterer Zylinder;
- 18:: Strahlengang der Röntgenstrahlungsquelle.

## Patentansprüche

1. Vorrichtung zur Ermittlung einer Verformung von einem Probenkörper, enthaltend oder bestehend aus:
a) ein Hochtemperaturofen, der einen Innenraum und einen Außenraum aufweist, wobei der Innenraum vom Außenraum durch eine Wandung des Hochtemperaturofens getrennt ist, wobei die Wandung eine thermische Isolierung aufweist;
b) mindestens ein Heizelement, das im Innenraum des Hochtemperaturofens angeordnet ist und geeignet ist, den Innenraum des Hochtemperaturofens auf eine Temperatur im Bereich von >25 °C aufzuheizen;
c) eine Aufnahmevorrichtung, die sich beweglich durch mindestens eine Öffnung der Wandung des Hochtemperaturofens erstreckt, wobei ein erster Teil der Aufnahmevorrichtung im Innenraum des Hochtemperatorofens angeordnet ist und zur Aufnahme eines Probenkörpers geeignet ist und ein zweiter Teil der Aufnahmevorrichtung im Außenraum des Hochtemperaturofens angeordnet ist;
d) eine Kraftapplikationsvorrichtung, die im Außenraum des Hochtemperaturofens mit dem zweiten Teil der Aufnahmevorrichtung verbunden ist und geeignet ist, eine Kraft auf einen Probenkörper zu applizieren, der in der Aufnahmevorrichtung aufgenommen ist;
e) eine Kraftmessvorrichtung, die im Außenraum des Hochtemperaturofens mit dem zweiten Teil der Aufnahmevorrichtung verbunden ist und geeignet ist, eine auf den Probenkörper applizierte Kraft zu messen, wobei die Kraftmessvorrichtung und die Kraftapplikationsvorrichtung als eine einzelne Vorrichtung oder als mindestens zwei separate Vorrichtungen ausgestaltet sind;
f) eine Röntgenstrahlungsquelle, die im Außenraum des Hochtemperaturofens angeordnet ist und konfiguriert ist, Röntgenstrahlung in einem Strahlengang auf einen Probenkörper zu strahlen, der in der Aufnahmevorrichtung aufgenommen ist, wobei die Röntgenstrahlungsquelle eine Röntgenröhre enthält oder daraus besteht;
g) ein Röntgenstrahlungsdetektor, der im Außenraum des Hochtemperaturofens und in dem Strahlengang der Röntgenstrahlungsquelle angeordnet ist und konfiguriert ist, Röntgenstrahlung des Strahlengangs zu detektieren; und
h) eine Steuereinheit.

2. Vorrichtung gemäß dem vorhergehenden Anspruch, **dadurch gekennzeichnet, dass** die Wandung des Hochtemperaturofens ein thermisch isolierendes Material, das für Röntgenstrahlung transparent ist, enthält oder daraus besteht, wobei die Wandung bevorzugt
i) einen keramischen Schaum enthält oder daraus besteht, wobei der keramische Schaum besonders bevorzugt ein Oxid eines chemischen Elements enthält oder daraus besteht, das eine Ordnungszahl im Bereich von ≤ 14 aufweist, wobei das Oxid insbesondere ausgewählt ist aus der Gruppe bestehend aus SiO₂, Al₂O₃, MgO und Kombinationen hiervon; und/oder
ii) Kohlenstoff, bevorzugt Graphit, enthält; und/oder
iii) eine Stützstruktur aufweist, welche für Röntgenstrahlung transparent ist, wobei die Stützstruktur bevorzugt eine weitere Wandung ist, welche die Wandung mit dem thermisch isolierenden Material kontaktiert, wobei die weitere Wandung bevorzugt ein Material enthält oder daraus besteht, das ausgewählt ist aus der Gruppe bestehend aus Polymer, Keramik, Metall und Kombinationen hiervon, wobei das Material optional ein faserverstärktes Material ist.

3. Vorrichtung gemäß einem der vorhergehenden Ansprüche, **dadurch gekennzeichnet, dass** der
i) erste Teil der Aufnahmevorrichtung einen Probenkörper aufweist, der von der Aufnahmevorrichtung aufgenommen ist, wobei der Probenkörper bevorzugt auf einer Seite, welche der von der Röntgenstrahlungsquelle abgestrahlten Strahlung zugewandt ist, ein Muster aufweist, das durch Partikel eines Pulvers etabliert ist, wobei das Pulver Atome eines chemischen Elements enthält oder daraus besteht, das eine Ordnungszahl im Bereich von ≥ 42 und einen Schmelzpunkt im Bereich von ≥ 1500 °C aufweist, wobei das chemische Element bevorzugt ausgewählt ist aus der Gruppe bestehend aus Molybdän, Palladium, Tantal, Wolfram, Rhenium und Kombinationen hiervon; und/oder
ii) zweite Teil der Aufnahmevorrichtung mindestens einen Zylinder mit einer offenen und einer geschlossenen Seite enthält, wobei der mindestens eine Zylinder bevorzugt ein chemisches Element enthält oder daraus besteht, das eine Ordnungszahl im Bereich von ≥ 26 aufweist, wobei das chemische Element besonders bevorzugt Stahl, Blei, Zinn, Molybdän, Tantal, Zirkon und/oder Wolfram enthält oder daraus besteht, wobei ganz besonders bevorzugt die offene Seite des mindestens einen Zylinders in Richtung einer Abschirmungswandung der Vorrichtung angeordnet ist und der mindestens eine Zylinder um einen weiteren Zylinder herum angeordnet ist, wobei der weitere Zylinder um mindestens eine Öffnung der Abschirmungswandung angeordnet ist, durch die sich der zweite Teil der Aufnahmevorrichtung beweglich erstreckt, wobei der weitere Zylinder einstückig mit der Abschirmungswandung ist, oder mit der Abschirmungswandung gasdicht verbunden ist.

4. Vorrichtung gemäß einem der vorhergehenden Ansprüche, **dadurch gekennzeichnet, dass** das mindestens ein Heizelement
i) dergestalt im Innenraum des Hochtemperaturofens angeordnet ist, dass es sich nicht innerhalb des Strahlengangs der Röntgenstrahlungsquelle befindet; und/oder
ii) geeignet ist, den Innenraum des Hochtemperaturofens auf eine Temperatur im Bereich von ≥ 100 °C, bevorzugt ≥ 200 °C, besonders bevorzugt ≥ 400 °C, ganz besonders bevorzugt ≥ 800 °C, insbesondere ≥ 1400 °C, optional ≥ 2400 °C, aufzuheizen; und/oder
iii) ausgewählt ist aus der Gruppe bestehend aus elektrische Widerstandsheizung, IR-Strahler und Kombinationen hiervon;
wobei die Vorrichtung bevorzugt mindestens zwei, besonders bevorzugt mindestens drei, insbesondere mindestens vier, solcher Heizelemente enthält.

5. Vorrichtung gemäß einem der vorhergehenden Ansprüche, **dadurch gekennzeichnet, dass** die Röntgenstrahlungsquelle konfiguriert ist, polychromatische Röntgenstrahlung abzustrahlen.

6. Vorrichtung gemäß einem der vorhergehenden Ansprüche, **dadurch gekennzeichnet, dass** die Kraftapplikationsvorrichtung geeignet ist, eine Kraft auf einen Probenkörper zu applizieren, der in der Aufnahmevorrichtung aufgenommen ist, die ausgewählt ist aus der Gruppe bestehend aus Zugkraft, Druckkraft, Scherkraft, Biegekraft und Kombinationen hiervon, wobei die Kraftapplikationsvorrichtung bevorzugt geeignet ist, eine Zugkraft, Druckkraft, Scherkraft und Biegekraft auf einen Probenkörper zu applizieren, der in der Aufnahmevorrichtung aufgenommen ist.

7. Vorrichtung gemäß einem der vorhergehenden Ansprüche, **dadurch gekennzeichnet, dass** die Steuereinheit konfiguriert ist,
i) das mindestens eine Heizelement, bevorzugt alle Heizelemente der Vorrichtung, zu steuern, wobei der Innenraum des Hochtemperaturofens besonders bevorzugt einen Temperatursensor zur Erfassung einer Temperatur eines Probenkörpers, der der in der Aufnahmevorrichtung aufgenommen ist, aufweist und die Steuereinheit konfiguriert ist, eine Temperatur des Probenkörpers basierend auf einem Signal des Temperatursensors zu regeln; und/oder
ii) die Kraftmessvorrichtung zu steuern, wobei die Steuereinheit bevorzugt konfiguriert ist, eine auf den Probenkörper über die Aufnahmevorrichtung applizierte Kraft basierend auf einem Signal der Kraftmessvorrichtung zu regeln; und/oder
iii) die Röntgenstrahlungsquelle zu steuern, wobei die Steuereinheit bevorzugt konfiguriert ist, die Röntgenstrahlungsquelle zur Abstrahlung von Röntgenstrahlung einer Wellenlänge in einem vordefinierten Bereich zu veranlassen; und/oder
iv) den Röntgenstrahlungsdetektor zu steuern, wobei die Steuereinheit bevorzugt konfiguriert ist, Signale von dem Röntgenstrahlungsdetektor zu empfangen und basierend auf den Signalen des Röntgenstrahlungsdetektors eine Verformung eines Probenkörpers zu ermitteln, wobei die Steuereinheit besonders bevorzugt konfiguriert ist, ferner Signale von der Kraftmessvorrichtung bezüglich einer auf den Probenkörper applizierten Kraft zu empfangen und basierend auf den Signalen der Kraftmessvorrichtung und auf Signalen des Röntgenstrahlungsdetektors einen Kennwert des Probenkörpers zu ermitteln, wobei der Kennwert insbesondere ausgewählt ist aus der Gruppe bestehend aus Zugkennwert, Druckkennwert, Scherkennwert, Biegekennwert und Kombinationen hiervon.

8. Vorrichtung gemäß einem der vorhergehenden Ansprüche, **dadurch gekennzeichnet, dass** die Vorrichtung ferner
i) eine Gasquelle enthält, die geeignet ist, ein Gas in den Innenraum des Hochtemperaturofens zu leiten, wobei das Gas bevorzugt ausgewählt ist aus der Gruppe bestehend aus Inertgas, Reaktionsgas und Kombinationen hiervon, wobei das Inertgas bevorzugt ein Edelgas enthält oder daraus besteht; und/oder
ii) eine Vakuumpumpe enthält, die geeignet ist, in dem Innenraum des Hochtemperaturofens ein Vakuum zu etablieren; und/oder
iii) eine Abschirmungswandung zur Abschirmung von Röntgenstrahlung enthält, die eine Schutztür umfasst, wobei in einem Innenraum der Abschirmungswandung der Hochtemperaturofen, die Röntgenstrahlungsquelle und der Röntgenstrahlungsdetektor angeordnet sind und in einem Außenraum der Abschirmungsvorrichtung der zweite Teil der Aufnahmevorrichtung angeordnet ist, wobei sich der zweite Teil der Aufnahmevorrichtung beweglich durch mindestens eine Öffnung der Abschirmungswandung erstreckt und durch einen Zylinder erstreckt, der einstückig mit der Abschirmungswandung ist oder mit der Abschirmungswandung verbunden ist, wobei die Abschirmungswandung und/oder der Zylinder bevorzugt ein chemisches Element enthält oder daraus besteht, das eine Ordnungszahl im Bereich von ≥ 26 aufweist, wobei das chemische Element besonders bevorzugt Stahl, Blei, Zinn, Molybdän, Tantal und/oder Wolfram enthält oder daraus besteht, wobei chemische Element besonders bevorzugt ausgewählt ist aus der Gruppe bestehend aus Stahl, Blei, Zinn und Kombinationen hiervon.

9. Verfahren zur Ermittlung einer Verformung von einem Probenkörper, umfassend die folgenden Schritte:
a) Bereitstellen einer Vorrichtung gemäß einem der vorhergehenden Ansprüche;
b) Ausstatten der Aufnahmevorrichtung der Vorrichtung mit einem Probenkörper;
c) Strahlen von Röntgenstrahlung in einem Strahlengang auf den Probenkörper über die Röntgenstrahlungsquelle der Vorrichtung;
d) Applizieren einer Kraft auf den mit Röntgenstrahlung bestrahlten Probenkörper durch die Kraftapplikationsvorrichtung der Vorrichtung;
e) Detektieren von Röntgenstrahlung des Strahlengangs durch den Röntgenstrahlungsdetektor; und
f) Ermittlung einer Verformung von dem Probenkörper basierend auf Signalen des Röntgenstrahlungsdetektors.

10. Verfahren gemäß Anspruch 9, **dadurch gekennzeichnet, dass** in Schritt b) der Probenkörper auf einer Seite, welche der von der Röntgenstrahlungsquelle abgestrahlten Strahlung zugewandt ist, mit einem Muster versehen wird, das durch Partikel eines Pulvers etabliert wird, wobei das Pulver Atome eines chemischen Elements enthält oder daraus besteht, das eine Ordnungszahl im Bereich von ≥ 42 und einen Schmelzpunkt im Bereich von ≥ 1500 °C aufweist, wobei das chemische Element bevorzugt ausgewählt ist aus der Gruppe bestehend aus Molybdän, Palladium, Tantal, Wolfram, Rhenium und Kombinationen hiervon

11. Verfahren gemäß einem der Ansprüche 9 oder 10, **dadurch gekennzeichnet, dass** in Schritt c) über die eine Röntgenstrahlungsquelle Röntgenstrahlung in einem Strahlengang auf den Probenkörper ge-strahlt wird, die polychromatische Röntgenstrahlung ist.

12. Verfahren gemäß einem der Ansprüche 9 bis 11, **dadurch gekennzeichnet, dass** vor Schritt d) der Innenraum des Hochtemperaturofens über das mindestens eine Heizelement der Vorrichtung auf eine Temperatur im Bereich von ≥ 100 °C, bevorzugt ≥ 200 °C, besonders bevorzugt ≥ 400 °C, ganz besonders bevorzugt ≥ 800 °C, insbesondere ≥ 1300 °C, optional ≥ 2400 °C, aufgeheizt wird, wobei das Aufheizen optional durch mindestens zwei, besonders bevorzugt mindestens drei, insbesondere mindestens vier, Heizelemente der Vorrichtung durchgeführt wird.

13. Verfahren gemäß einem der Ansprüche 9 bis 12, **dadurch gekennzeichnet, dass** in Schritt d) eine Kraft auf den Probenkörper appliziert wird, die ausgewählt ist aus der Gruppe bestehend aus Zugkraft, Druckkraft, Scherkraft, Biegekraft und Kombinationen hiervon, wobei bevorzugt, optional gleichzeitig oder sequentiell, eine Zugkraft, Druckkraft, Scherkraft und Biegekraft auf den Probenkörper appliziert wird.

14. Verfahren gemäß einem der Ansprüche 9 bis 13, **dadurch gekennzeichnet, dass** in dem Verfahren
i) eine Temperatur des Probenkörpers basierend auf einem Signal eines Temperatursensors der Vorrichtung geregelt wird und/oder
ii) die auf den Probenkörper applizierte Kraft durch die Kraftmessvorrichtung der Vorrichtung gemessen wird und die auf den Probenkörper applizierte Kraft basierend auf einem Signal der Kraftmessvorrichtung geregelt wird.

15. Verfahren gemäß einem der Ansprüche 9 bis 14, **dadurch gekennzeichnet, dass** das Verfahren ferner ein Messen der auf den Probenkörper applizierten Kraft durch die Kraftmessvorrichtung der Vorrichtung umfasst, wobei, basierend auf Signalen des Röntgenstrahlungsdetektors und Signalen der Kraftmessvorrichtung ein Kennwert des Probenkörpers ermittelt wird, wobei der Kennwert insbesondere ausgewählt ist aus der Gruppe bestehend aus Zugkennwert, Druckkennwert, Scherkennwert, Biegekennwert und Kombinationen hiervon.
